# EUROPÄISCHE PATENTANMELDUNG

(11) **EP 2 464 003 A2**
(43) Veröffentlichungstag der Anmeldung: **13.06.2012**
(21) Anmeldenummer: 11192302.5
(22) Anmeldetag: 07.12.2011
(51) Int. Cl.: H02P 25/16, H02P 25/02

(54) **Elektronisch kommutierter Elektromotor mit zwei Phasen und Verwendung eines solchen Elektromotors**

(30) Priorität: 09.12.2010 DE 102010054026
(71) Anmelder: Continental Automotive GmbH, 30165 Hannover (DE)
(72) Erfinder: Kuehnel, Frank, 65760 Eschborn (DE)

(57) **Zusammenfassung**

Ein insbesondere zum Antrieb einer Pumpenstufe (6) in einer Kraftstoffversorgungsanlage (1) eines Kraftfahrzeuges vorgesehener, elektronisch kommutierter Elektromotor (5) hat einen Kondensator (20) zur Verbindung von Spulenenden (17, 18) zweier Spulenanordnungen (11, 12) mit der Masse. An den anderen Spulenenden (21, 22) wird über mehrere Schalter (23 - 26) eine wechselnde Betriebsspannung angelegt. An dem den Kondensator (20) aufweisenden Ende stellt sich die halbe Betriebsspannung ein. Der Elektromotor (5) ist besonders einfach aufgebaut und lässt sich kostengünstig fertigen.

## Beschreibung

Die Erfindung betrifft einen elektronisch kommutierten Elektromotor mit zwei Phasen, insbesondere einen Elektrokleinmotor zum Antrieb von elektrischen Einrichtungen in einem Kraftfahrzeug, mit einem einen Permanentmagneten aufweisenden Rotor und mit einem zwei Spulenanordnungen aufweisenden Stator, wobei die Spulenanordnungen des Stators dem Permanentmagneten des Rotors gegenüberstehen. Weiterhin betrifft die Erfindung eine vorteilhafte Verwendung eines solchen Elektromotors.

Elektrokleinmotoren werden in heutigen Kraftfahrzeugen in großen Stückzahlen eingesetzt und sind damit bekannt. Zur Verringerung eines Verschleißes, insbesondere in aggressiver Umgebung, werden diese Elektrokleinmotoren mit einer elektronischen Kommutierung ausgestattet. Die elektronische Kommutierung führt zudem zu einem hohen Wirkungsgrad und damit zu einem geringen Energieverbrauch.

Nachteilig bei den elektronisch kommutierten Elektromotoren ist jedoch, dass die elektronische Kommutierung durch den Einsatz einer Elektronik einen hohen baulichen Aufwand erfordert. Bei den bekannten Elektromotoren erfordern die Spulenanordnungen jeder Phase an beiden Enden jeweils zwei Schalter zur Erzeugung der Stromumkehr und damit zur Erzeugung des Drehfeldes.

Der Erfindung liegt das Problem zugrunde, einen Elektromotor der eingangs genannten Art so weiterzubilden, dass er besonders einfach aufgebaut und kostengünstig herstellbar ist. Weiterhin soll eine vorteilhafte Verwendung des erfindungsgemäßen Elektromotors gefunden werden.

Das erstgenannte Problem wird erfindungsgemäß dadurch gelöst, dass jeweils ein erstes Ende der beiden Spulenanordnungen über einen Kondensator mit einem konstanten Potential verbunden ist, und dass jeweils an dem zweiten Ende der beiden Spulenanordnungen eine wechselnde Betriebsspannung anliegt.

Durch diese Gestaltung wird der bauliche Aufwand zur Erzeugung des Drehfeldes an dem ersten Ende der Spulenanordnungen durch den Einsatz des Kondensators besonders gering gehalten. Dank der Erfindung werden Schalter zur Erzeugung des Drehfeldes an dem ersten Ende der Spulenanordnungen vermieden. Der erfindungsgemäße Elektromotor ist damit besonders einfach aufgebaut und lässt sich insbesondere in großen Stückzahlen besonders kostengünstig fertigen. Bei dem konstanten Potential kann es sich um die Masse oder eine konstante Betriebsspannung handeln.

Der bauliche Aufwand zum Betrieb des erfindungsgemäßen Elektromotors lässt sich besonders gering halten, wenn jeweils das zweite Ende der Spulenanordnungen mit zwei Schaltern verbunden ist, wobei die Schalter zum Phasenwechsel der Betriebsspannungen ausgebildet sind. Als Schalter eignen sich sogenannte MOSFETs.

Der Betrieb des erfindungsgemäßen Elektromotors mit einem Gleichspannungsnetz gestaltet sich besonders einfach, wenn einer der Schalter zur Verbindung des zweiten Endes der jeweiligen Spulenanordnung mit der Betriebsspannung eines Gleichstromnetzes und der andere der Schalter zur Verbindung des zweiten Endes der jeweiligen Spulenanordnung mit der Masse ausgebildet ist. Durch diese Gestaltung stellt sich an dem jeweils ersten Ende der Spulenanordnung über den mit dem konstanten Potential verbundenen Kondensator die halbe Betriebsspannung ein.

Der erfindungsgemäße Elektromotor gestaltet sich konstruktiv besonders einfach, wenn das jeweils eine erste Ende der Spulenanordnungen einen Knotenpunkt hat und wenn der Kondensator zwischen dem Knotenpunkt und dem konstanten Potential geschaltet ist.

Zur Erhöhung der Laufruhe des erfindungsgemäßen Elektromotors trägt es bei, wenn jede der Spulenanordnungen zwei in Reihe geschaltete Spulen hat und wenn die Spulen auf einander gegenüberstehenden Seiten des Rotors angeordnet sind.

Der Einsatz von seltenen Erden zur Fertigung des erfindungsgemäßen Elektromotors lässt sich einfach vermeiden, wenn der Permanentmagnet des Rotors aus CuNiFe gefertigt ist.

Der erfindungsgemäße Elektromotor ist zuverlässig vor Verschleiß in einer kraftstoffhaltigen Umgebung geschützt, wenn die Schalter und der Kondensator eine Ummantelung aus einem kraftstoffbeständigen Material aufweisen. Hierzu können die Schalter und der Kondensator auch in einem Gehäuse abgedichtet oder vergossen sein.

Das zweitgenannte Problem, nämlich die Schaffung einer vorteilhaften Verwendung des Elektromotors wird erfindungsgemäß durch den Einsatz zum Antrieb einer Pumpenstufe einer Kraftstoffpumpe eines Kraftfahrzeuges gelöst. Gerade in aggressiven Umgebungen, wie sie bei heutigen Kraftstoffen in Kraftstoffbehältern herrschen, führt der einfache Aufbau des Elektromotors zu einer weitgehenden Vermeidung des Verschleißes, weil die Schalter und der Kondensator zuverlässig ummantelt und damit vor der aggressiven Umgebung geschützt werden können.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine Kraftstoffversorgungsanlage eines Kraftfahrzeuges mit einem erfindungsgemäßen Elektromotor,
- Fig. 2: schematisch einen Querschnitt durch den erfindungsgemäßen Elektromotor,
- Fig. 3: einen Schaltplan eines Stators des erfindungsgemäßen Elektromotors.

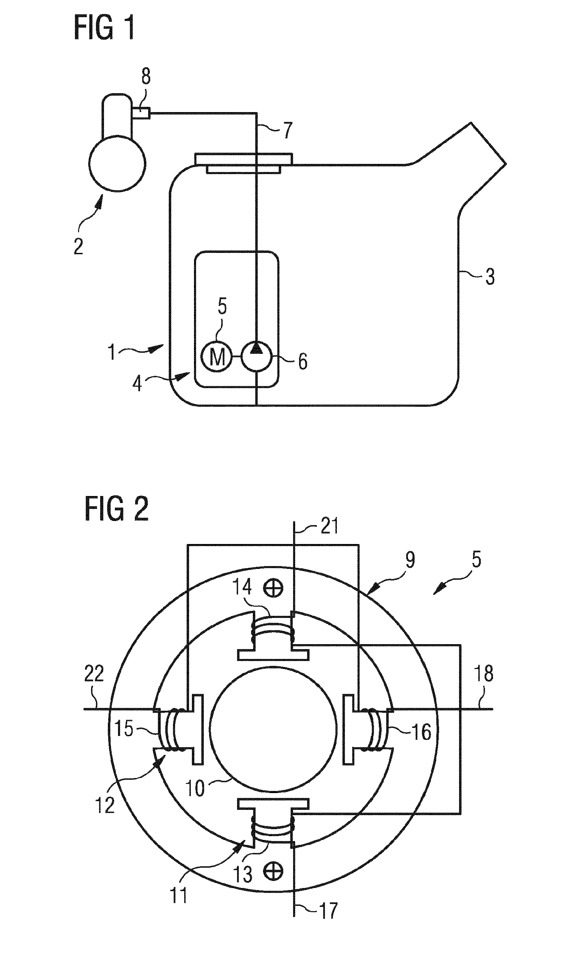

Figur 1 zeigt schematisch eine Kraftstoffversorgungsanlage 1 für eine Brennkraftmaschine 2 eines Kraftfahrzeuges mit einer in einem Kraftstoffbehälter 3 angeordneten Kraftstofffördereinheit 4. Die Kraftstofffördereinheit 4 hat eine von einem Elektromotor 5 angetriebene Pumpenstufe 6. Die Pumpenstufe 6 ist über eine Vorlaufleitung 7 mit einer Einspritzleiste 8 der Brennkraftmaschine 2 verbunden. Die Kraftstofffördereinheit 4 saugt Kraftstoff aus dem Bodenbereich des Kraftstoffbehälters 3 an und fördert diesen über die Vorlaufleitung 7 zu der Brennkraftmaschine 3 des Kraftfahrzeuges. Der Elektromotor 5 wird dabei von Kraftstoff durchströmt. Die Versorgung des Elektromotors 5 mit elektrischem Strom erfolgt über ein nicht dargestelltes 12 Volt Gleichspannungsnetz des Kraftfahrzeuges.

Figur 2 zeigt schematisch eine Schnittdarstellung durch den Elektromotor 5 aus Figur 1. Der Elektromotor 5 hat einen feststehenden Stator 9 und innerhalb einen drehbar gelagerten Rotor 10. Zur Vereinfachung der Zeichnung ist von dem Rotor 10 nur ein im Querschnitt runder Permanentmagnet aus CuNiFe dargestellt. Der Stator 9 weist zwei Spulenanordnungen 11, 12 mit jeweils zwei in Reihe geschalteten Spulen 13 - 16 auf. Die beiden Spulen 13 - 16 jeder Spulenanordnung 11, 12 sind auf einander gegenüberstehenden Seiten des Rotors 10 angeordnet.

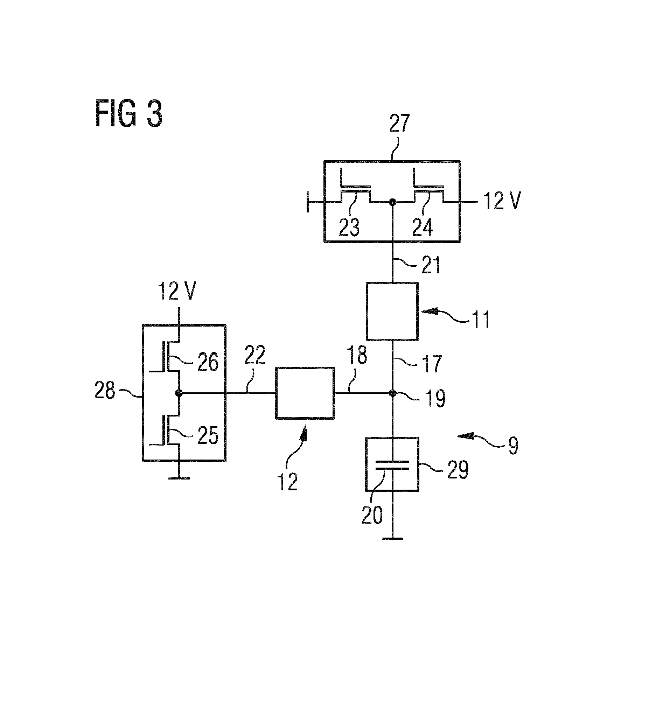

Figur 3 zeigt einen Schaltplan des Stators 9 des Elektromotors 5. Hierbei ist zu erkennen, dass jeweils ein erstes Ende der beiden Spulenanordnungen 11, 12 an einem Knotenpunkt 19 miteinander verbunden sind. Der Knotenpunkt 19 ist über einen Kondensator 20 mit der Masse verbunden. Die jeweils zweiten Enden 21, 22 der beiden Spulenanordnungen 11, 12 sind über jeweils zwei Schalter 23 - 26 wahlweise mit der Masse oder der 12 Volt Betriebsspannung des Gleichspannungsnetzes des Kraftfahrzeuges verbindbar. Damit ist einer der Schalter 24, 26 zur Verbindung des zweiten Endes 21, 22 der jeweiligen Spulenanordnung 11, 12 mit der Betriebsspannung eines Gleichstromnetzes und der andere der Schalter 23, 25 zur Verbindung des zweiten Endes 21, 22 der jeweiligen Spulenanordnung 11, 12 mit der Masse ausgebildet.

Die Schalter 23 - 26 und der Kondensator 20 weisen jeweils eine Ummantelung 27 - 29 aus einem kraftstoffbeständigen Material auf.

Durch abwechselndes Verbinden der zweiten Enden 21, 22 der Spulenanordnungen 11, 12 mit der Betriebsspannung und mit der Masse wird ein Wechselfeld erzeugt, welches auf den Permanentmagneten einwirkt und den in Figur 2 dargestellten Rotor 10 in Drehung versetzt. An dem ersten Enden der Spulenanordnungen 17, 18 stellt sich, bedingt durch den Kondensator 20 die halbe Betriebsspannung ein.

## Patentansprüche

1. Elektronisch kommutierter Elektromotor (5) mit zwei Phasen, insbesondere ein Elektrokleinmotor zum Antrieb von elektrischen Einrichtungen in einem Kraftfahrzeug, mit einem einen Permanentmagneten aufweisenden Rotor (10) und mit einem zwei Spulenanordnungen (11, 12) aufweisenden Stator (9), wobei die Spulenanordnungen (11, 12) des Stators (9) dem Permanentmagneten des Rotors (10) gegenüberstehen, **dadurch gekennzeichnet, dass** jeweils ein erstes Ende (17, 18) der beiden Spulenanordnungen (11, 12) über einen Kondensator (20) mit einem konstanten Potential verbunden ist und dass jeweils an dem zweiten Ende (21, 22) der beiden Spulenanordnungen (11, 12) eine wechselnde Betriebsspannung anliegt.

2. Elektromotor nach Anspruch 1, dadurchgekennzeichnet, dass jeweils das zweite Ende (21, 22) der Spulenanordnungen (11, 12) mit zwei Schaltern (23 - 26) verbunden ist, wobei die Schalter (23 - 26) zum Phasenwechsel der Betriebsspannungen ausgebildet sind.

3. Elektromotor nach Anspruch 2, dadurchgekennzeichnet, dass einer der Schalter (24, 26) zur Verbindung des zweiten Endes (21, 22) der jeweiligen Spulenanordnung (11, 12) mit der Betriebsspannung eines Gleichstromnetzes und der andere der Schalter (23, 25) zur Verbindung des zweiten Endes (21, 22) der jeweiligen Spulenanordnung (11, 12) mit der Masse ausgebildet ist.

4. Elektromotor nach Anspruch 1, dadurchgekennzeichnet, dass das jeweils eine erste Ende (17, 18) der Spulenanordnungen (11, 12) einen Knotenpunkt (19) hat und dass der Kondensator (20) zwischen dem Knotenpunkt (19) und dem konstanten Potential geschaltet ist.

5. Elektromotor nach einem der vorhergehenden Ansprüchen, **dadurch gekennzeichnet, dass** jede der Spulenanordnungen (11, 12) zwei in Reihe geschaltete Spulen (13 - 16) hat und dass die Spulen (13 - 16) auf einander gegenüberstehenden Seiten des Rotors (10) angeordnet sind.

6. Elektromotor nach einem der vorhergehenden Ansprüchen, **dadurch gekennzeichnet, dass** der Permanentmagnet des Rotors (10) aus CuNiFe gefertigt ist.

7. Elektromotor nach einem der Ansprüche 2 bis 6, **dadurch gekennzeichnet, dass** die Schalter (23 - 26) und der Kondensator (20) eine Ummantelung (27 - 29) aus einem kraftstoffbeständigen Material aufweisen.

8. Verwendung eines Elektromotors nach einem der vorhergehenden Ansprüche zum Antrieb einer Pumpenstufe einer Kraftstoffpumpe eines Kraftfahrzeuges.
